# EUROPEAN PATENT APPLICATION

(11) **EP 4 660 155 A1**
(43) Date of publication of application: **10.12.2025**
(21) Application number: 24180070.5
(22) Date of filing: 04.06.2024
(51) Int. Cl.: C03B 1/02, C03B 5/00, C03B 37/01, C03C 1/00, C03C 13/06, C03C 6/08, C03B 5/12

(54) **MINERAL WOOL MANUFACTURING METHOD**

(71) Applicant: Przedsiebiorstwo Obrotu Surowcami Wtornymi "HERMEX" Adam CZECH, 42-284 Herby (PL)
(72) Inventor: CZECH, Adam, 42-284 Herby (PL)
(74) Representative: Korbela, Anna

(57) **Abstract**

The subject of the invention is a mineral wool manufacturing method, in which the aluminium oxide (found in basalt and bauxite) is replaced by fine fractions of aluminium dross.

This method includes an initial stage of preparing for the utilization of metallurgical waste (1) obtained from the processing of aluminium dross, during which the lighter, dusty fractions are recovered and isolated, as well as very fine metallurgical waste (1), and any present coarse dross is ground to obtain fine metallurgical waste (1), which is then subjected to consolidation and palletisation or briquetting of this reclaimed waste (3), preferably in a briquetting machine to obtain briquettes (4).

The mineral wool manufacturing method, according to claim 1, is characterized in that the reclaimed waste (3) is subjected to a consolidation process using a binder in the following proportions:
- 1-100% of the mass of reclaimed waste (3),
- 0-70% of the mass of cement or lime,
- 0-70% of the mass of reclaimed residues (5) obtained from another previous process of producing lava (6).

The grinding of metallurgical waste (1) is carried out in mills, preferably in a ball mill.

## Description

The subject of the invention is a method for manufacturing mineral wool (glass and rock), which is a mineral-based insulating material used

in construction for thermal and acoustic insulation of external and internal walls, ceilings and floors, roofs and flat roofs, as well as installation shafts, and also as an insulating-structural core for construction sandwich panels.

The process of manufacturing mineral wool is usually conducted in a shaft furnace.

The term *"mineral wool"* is a general concept encompassing well-known materials primarily derived from natural minerals.

Some materials (such as e.g. steel, aluminium) are excellent conductors of heat. Others (like mineral wool), on the contrary, are excellent insulators for such materials. Therefore, this first material (i.e. mineral wool) can be used to thermally insulate heat-conducting materials (e.g. steel, metallic aluminium, aluminium) effectively reducing heat loss.

The thermal properties of a given mineral wool are precisely determined by the thermal conductivity coefficient of the material from which it is made.

Depending on what mineral (i.e. which raw material) was used for the production of mineral wool, the following types are distinguished:
- rock mineral wool (also called stone wool) or
- glass mineral wool.

The main component of rock wool is basalt or bauxite.

More precisely, rock wool is obtained from a mixture of basalt or bauxite, and one of these substances is combined with coke, slag with the addition of dolomite, limestone, and with gabbro (e.g., in the proportion of basalt or bauxite - 24-26%, slag - 18-20%, dolomite - 7-8%, gabbro - 48-50%).

Rock wool is formed during the melting of all the combined components, which are heated to a temperature above 1400°C.

Glass wool, on the other hand, is primarily produced from quartz sand and glass cullet. Additionally, during the production of glass wool, other ingredients are added, such as gabbro, dolomite or limestone, as well as bauxite.

Glass wool is produced by melting all the combined components at approximately 1000°C.

Rock and glass wool are produced in a similar way and exhibit similar properties. However, certain differences arise from the distinct properties of the minerals used in their production. Mineral wool, thanks to its fibrous structure, has very good sound absorption properties in the mid and high-frequency ranges. This characteristic is significant for shaping reverberation time in spaces such as concert halls, cinemas, and recording studios. On the other hand, rock wool, as the only type from among all mineral wools - due to the fact that it is produced from stone - is not only non-combustible (does not contribute to fire) but also withstands fire temperatures. Therefore, it is used where it is necessary to increase the fire resistance of building structures (e.g., steel, reinforced concrete) and installations (e.g., ventilation ducts, smoke exhaust). Due to the high fire and explosion hazard, it is also very useful for making fire insulation. It is also extremely useful, for example, in the shipbuilding industry. Therefore, mineral wool is an important material used to cover vertical, horizontal, and inclined surfaces of buildings and structures from both inside and outside, in order to achieve the required thermal, acoustic, vapor barrier, mechanical, and fire-resistant properties. However, its availability is hindered by the fact that both the production of mineral wool from bauxite and from basalt is associated with the necessity of mining the respective rock, as well as its processing and transportation.

Understanding the essence of the invention can be facilitated by recalling a few concepts.

In the Polish language, there are two names referring to the same substance: *"glin"* and *"aluminium".* As sources state (Geological Museum of the Polish Geological Institute - National Research Institute, ul. Rakowiecka 4 - entrance from ul. Wiśniowa - 00-975 Warsaw https://www.pgi.gov.pl/muzeum/kopalnia-wiedzy-1/12652-glin-2.html), although they are often used interchangeably colloquially, the name *"glin"* is usually used in relation to the element and its compounds, while the name *"aluminium"* is used to refer to its metallic form.

Aluminium in its metallic form is silvery-white, very soft, light, and malleable. It is the most common metal in the Earth's crust. It is a component of dozens of different minerals. It is found, for example, in feldspars, clay minerals, or micas. Precious gemstones such as corundum (with its colourful varieties, ruby and sapphire) or beryl (with its most beautiful variety, emerald) also belong to minerals containing aluminium.

Due to its high reactivity with oxygen, it is rarely found in its pure form in nature.

Despite its widespread occurrence, most minerals containing aluminium are not economically significant as its source, as almost all metallic aluminium is extracted exclusively from bauxite - a clay rock formed from the weathering of aluminosilicate rocks.

The exploitation and technological processes leading to the production of aluminium are very expensive and consume enormous amounts of energy (also due to the transportation of the rock from which aluminium is obtained).

Basalt - it is an alkaline, dense volcanic rock with a very fine-grained structure (cryptocrystalline), aphanitic, or porphyritic. In the fine-grained rock mass, small crystals or larger clusters of olivine (olivine bombs) are often visible. Basalt also contains aluminium oxides. The chemical composition of typical basalt is SiO₂ (Silicon dioxide, silica): 45-55%, Al₂O₃ (Aluminium oxide - corundum): approx. 14%, CaO (Calcium oxide - quicklime): approx. 10%, FeO (iron oxide): 5-14%, MgO (Magnesium oxide, dead-burned magnesia): 5-12%, other basic compounds: 2-6%, TiO₂ (Titanium dioxide): 0.5-2%.

Bauxite, on the other hand, is a mixture of minerals containing varying concentrations of hydrated aluminium oxides or hydroxides (as aluminium is highly reactive), as well as impurities. As a mineral, it costs quite a lot.

So, bauxite mainly consists of non-metallic aluminium. It is also used as an additive to materials used to produce so-called *"lava"* - a liquid product consisting of liquefied minerals, which are melted in a so-called *"shaft furnace"* to obtain mineral wool from them.

The shaft furnace used to conduct the process of obtaining mineral wool, at temperatures exceeding even 1500°C, functions essentially as a chimney or vertical pipe, into which nozzles are inserted at a certain height to blow air. In addition to the materials for producing lava, a material that burns (coke) is introduced into the furnace. Thus, the furnace is a vertical pipe fueled by coke and air (with molten materials introduced to form lava).

The composition of the minerals melted in the shaft furnace is selected to ensure that the resulting material has the appropriate physicochemical properties, such as suitable strength and melting temperature.

An important parameter of the process conducted in the shaft furnace is the introduction of SiO₂ (silicon dioxide) in the appropriate proportion. Depending on its amount, the correct proportion of aluminium oxide (Al₂O₃) must also be added to achieve balance, as together they form complete eutectics (i.e. mixtures of two or more phases of specific composition that separate from liquid solutions at a certain temperature, known as the eutectic temperature). They dissolve in the shaft furnace within the predetermined and known temperature range.

During the melting of metallic aluminium at temperatures above 800°C, a specific *"crust"* forms on the surface of the liquid metal. This crust, also known as waste or slag, consists of a mixture of oxidized aluminium (its oxides) as well as metallic aluminium.

In the state of the art, there are methods and devices known for recovering metallic aluminium from the described waste - slag (also called aluminium dross), which is formed during the processing of aluminium. These methods involve grinding of the dross, for example, in ball mills, where fine fractions with relatively low aluminium content are obtained. Such a method and device are also known from the description of the Polish invention *"Equipment for cleaning and grain classification of small metallurgical discards and method of cleaning and grain classification of small metallurgical discards"* patent no. 232821 filed on 26 November 2013. With the described method, lighter, dusty fractions of dross are recovered from fine metallurgical waste, which are isolated during the process described above (an important feature of this solution is that the fine fractions in the cascade pipeline rise to individual cascades, which are non-coaxial and have different diameters, causing disturbance in the movement of fine fractions).

The material obtained in the above-described process of melting and mixing of the mentioned components (leading to the formation of lava, from which mineral wool is obtained) is then subjected to a fibrillation, and later - hydrophobization process (a process of imparting hydrophobic properties to surfaces or entire volumes of hydrophilic materials, i.e., properties of water repellency to prevent water penetration into the depth of material structures).

Traditionally, the process of obtaining mineral wool in the shaft furnace has used bauxites, which are natural minerals. However, the inventor of the invention made an attempt to change this established practice, and this attempt brought excellent results.

Various other methods of producing mineral wool are known worldwide, but they do not utilize devices or raw materials such as those described above.

For example, there is a solution known from the description of the Chinese invention *"Modulation method for producing mineral wool from solid waste silicon-manganese slag with controllable slag ball content"* CN110255913A with a priority date of 12 June 2019; a method of modulation for producing mineral wool from solid waste of silicon-manganese slag with controlled content of slag balls is known, which includes the following steps:
- 51, silicomanganese slag treatment: selecting and pulverizing a proper amount of silicomanganese slag;
- S2, preparation of a modulation material: selecting and uniformly mixing proper amounts of sodium nitrate and chromium sesquioxide;
- S3, feeding treatment: uniformly mixing the materials obtained in the step S1 and the step S2, and then adding the mixture into a slag melting furnace for high-temperature melting;
- S4, fluxing treatment: adding a fluxing agent into the slag furnace; and
- S5, guiding the liquid obtained in the step S4 into a roller of a centrifugal machine to obtain raw cotton.

There is a solution known from the description of the Chinese invention *"Method for producing mineral wool and molten iron from low-iron metallurgic waste and blast furnace slag"* CN108178502A with a priority date of 11 December 2017; a method for producing mineral wool and molten iron from low-iron metallurgical waste and blast furnace slag. Blast furnace slag and a metallurgic waste additive are used as raw materials, and the weight percentages of the blast furnace slag and the metallurgic waste additive in the raw materials are 60%-100% and 0-40% respectively. The acidity coefficient of mixed slag of the blast furnace slag and the metallurgic waste additive is 0.94-1.5. The metallurgic waste additive adopts filter-press mud cakes and drainage ditch silt obtained after metallurgic wastewater treatment, and the weight percentage of SiO₂ and Al₂O₃ is larger than or equal to 45%. Resources such as coke, basalt, silica and the like are not used.

There is also a solution known from the description of another Chinese invention *"Method and device for producing mineral wool by matching molten-state blast furnace slag with mine tailings"* CN104370455A with a priority date of 19 November 2014; a method for producing mineral wool by combining molten blast furnace slag with mine waste. Molten-state blast furnace slag is taken as a raw material, the mine tailings are taken as a quenching and tempering agent, two stages of electric furnaces are adopted for heating, a nitrogen spraying and blowing system is arranged at the bottom of each furnace, magma after refinement, homogenization, quenching and tempering is thrown into mineral wool filaments of 3-5 microns by a centrifuge, and a mineral wool product is obtained after being collected by a wool collecting machine. A device for implementing the method comprises the electric furnace I, the electric furnace II, the centrifuge and the wool collecting machine which are sequentially connected.

The aim of the invention is to develop an economical method for managing the waste generated during aluminium melting, such as aluminium dross or slag, and processing these wastes so that it is possible to obtain mineral wool.

The essence of the invention lies in substituting fine fractions of aluminium dross for aluminium oxide (which is found in basalt and bauxite).

The developed method of producing mineral wool is characterized by the initial stage of preparing for the utilization of metallurgical waste obtained from the processing of aluminium dross, during which lighter, dusty fractions are recovered and isolated, as well as very fine metallurgical waste, and optionally coarse-grained dross, which may also be ground to obtain fine metallurgical waste from them.

The prepared metallurgical material is typically introduced into a device used for cleaning and size classification of fine metallurgical waste, in which - as the fine, purified metallurgical waste moves within it - separation of materials differing in grain size, mass, and physicochemical properties is carried out.

Next, waste segregation and separation into individual fractions are always carried out, after which the waste reclaimed as a result of the cleaning process of fine metallurgical waste - containing aluminium oxide Al₂O₃ in the form of powder or dust with a grain size below 2 mm, but also with a grain diameter greater than 2 mm and constituting from 60% to 85% of the mass of metallurgical waste - undergoes a merging process, and this reclaimed waste is granulated or briquetted (preferably in a briquetting machine to obtain a briquette).

Afterward, the obtained briquette, with dimensions of briquettes ranging from approximately 50 mm to about 300 mm in diameter and from about 50 mm to about 500 mm in height, is mixed, combining:
- briquettes (4) in an amount of approximately 30%-45%,
- gabbro in an amount of approximately 35%-50%,
- slag in an amount of approximately 10%-20%, and also
- dolomite in an amount of approximately 5%-20%, and then:
   the resulting mixture is mixed and melted in a glass furnace to produce lava until a temperature above 1000°C is reached. Subsequently, the lava obtained in this way is subjected to the process of fiberization, followed by hydrophobization.

Preferably, the recycled waste used in the developed method is previously subjected to a consolidation process using a binder in the proportion:
- 1-100% of the mass of the reclaimed waste,
- 0-70% of the cement or lime mass,
- 0-70% of the mass of reclaimed residues obtained from another previous lava production process (6).

Preferably, the reclaimed waste utilized in the developed method is subjected to a merging process using a slightly different binder (containing a certain amount of cement or lime and reclaimed residues obtained from another previous lava production process) in the following proportion:
- 30-50% of the reclaimed waste,
- 5-25% of cement or lime,
- 25-35% of reclaimed residues obtained from another previous lava production process.

Preferably, in the developed method of mineral wool production briquette is used, which after briquetting, at the stage of mixing the briquette with other materials before heating them to produce lava, are mixed with lime or coke, and then melted together with other materials in the glass furnace to form lava.

Typically, in the developed method, the comminution of metallurgical waste is carried out in mills, preferably in ball mills.

The developed method for manufacturing mineral wool enables the utilization of waste generated during aluminium processing.

The advantage of the developed method lies in devising a way to replace the necessary mineral raw material (bauxite or basalt) with waste generated during aluminium melting (such as aluminium dross or slag, or material obtained from processing these wastes), which enables the production of mineral wool.

Until now, waste products from the well-known and widely practiced process of producing metallic aluminium have not been used in the production of mineral wool. During this process (at the time of its melting), fine waste is generated and removed as it floats on the surface. These waste materials, such as dross (or slag), typically accumulate and pollute the environment. So far, there has been no effective method found for their management.

By utilizing the waste materials that clutter the areas where metallic aluminium is produced (also the places where aluminium is processed), and by incorporating slag (a troublesome fine waste), not only is the cleanup of these areas facilitated for their remediation, but also the costs of producing mineral wool are reduced. At the same time, the physical properties of the mineral wool obtained through these known methods are maintained.

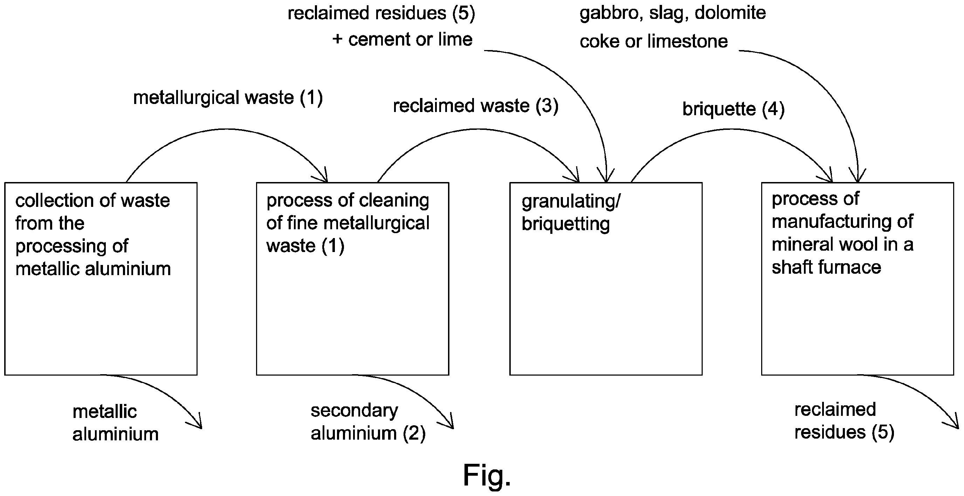

The subject of the invention is presented in the drawing, in which:
- The figure shows a block diagram of the method for producing mineral wool.

The mineral wool manufacturing method, which is the subject of this invention, begins with the initial stage of preparing to use metallurgical waste 1,
obtained during the processing of aluminium, during which (during its melting) coarse-grained and fine-grained dross is formed.

The fine-grained dross (floating on the surface of the molten material during the production of metallic aluminium and during its thermal processing) is then subjected to a cleaning and separation process of fine metallurgical waste 1 (for example, by the method and device described in Polish patent no. Pat.232821).

At this stage, the lighter, powdery fractions of the fine metallurgical waste 1 are processed, recovered and isolated, along with very fine metallurgical waste 1, including metal oxides and their salts.

However, coarse-grained dross is milled (for example in ball mills, where fine fractions with a relatively low aluminium content are obtained).

Conducting the challenging stages of cleaning and grain classification of fine metallurgical waste 1 contained in bulk materials (fine or crushed, including the finest ones in the form of dust and powders, for example, those resulting from processing dross in ball mills) containing fine grains of valuable metal, the recovery of which is technologically difficult, is greatly facilitated by specialized devices, such as the aforementioned device revealed in the description of the Polish invention Pat.232821 or others known from the state of the art, which can be used in the developed process.

As fine metallurgical waste 1 is moved and sorted, for example, in the described device for cleaning and grain classification, an efficient separation occurs based on differences in grain size, mass, physicochemical properties, and the amount of metallic aluminium present. There is also segregation of fine metallurgical waste 1 and separation into individual fractions.

From one ton of crushed aluminium dross, typically around 150-400 kg of material (15 to 40% of the **mass)** is **reclaimed,** which can be used, after magnetic separation, for melting aluminium alloys or aluminium.

The **reclaimed** material is referred to as secondary aluminium 2, which is not needed in the process of producing mineral wool.

The waste reclaimed after the cleaning process of fine metallurgical waste 1, previously considered useless but now reclaimed waste 3 (constituting 60% to 85% of the mass of crushed aluminium dross), has proven to be remarkably useful in the further process of obtaining mineral wool. Tests have shown that reclaimed waste 3 can effectively replace bauxite, with the caveat that it cannot be introduced into the glass furnace in loose form (as it would hinder its permeability and the rise of fumes).

Therefore, in the process of utilizing the aforementioned reclaimed waste 3, it is only necessary to ensure that the permeability of the furnace is maintained and that it does not become choked.

To ensure that the circulation of exhaust gases and ventilation of the furnace are not disrupted, the reclaimed waste 3, which has been given the appropriate form beforehand, is introduced into the furnace.

Therefore, it is previously subjected to a briquetting process, usually using a binder.

The briquetting process typically takes place in a briquetting machine (e.g., a roller briquetter), but bonding can be achieved using other methods as well, including manual ones.

To obtain briquettes 4 (for example, in the form of cylinders or cubes), granules, or other large pieces, the materials described **below** are mixed, with the percentages indicating their mass proportions:
- 1-100%, preferably about 30-50% of the reclaimed waste 3 (resulting from the cleaning process of fine metallurgical waste 1), primarily containing aluminium oxide Al₂O₃ in the form of powder or dust with a grain size below 2 mm, but also with a grain size larger than 2 mm,
- 0-70%, preferably about 5-25% of cement or lime (lime facilitates the oxidation of the remaining metallurgical waste 1, i.e., metallic aluminium, and serves as a binder along with cement),
- 0-70%, preferably about 25-35% of the reclaimed residues 5 obtained from another previous process of lava 6 production.

The large pieces obtained by combining the materials described above, such as granules or briquettes 4, for example:
with a diameter ranging from about 50 mm to about 300 mm, preferably 100 mm, and
a height ranging from about 50 mm to about 500 mm, preferably 150 mm,

- are used as a substitute for bauxite (or basalt) in the process of mineral wool manufacturing according to the invention. The rest of the process of producing mineral wool is known from the prior art.

The resulting briquette 4, manufactured from materials and by the method according to the invention, together with additives (which are also added to the production of mineral wool in methods known from the prior art, namely: limestone, dolomite, gabbro, coke, or slag with the addition of dolomite) are mixed and melted in a glass furnace to achieve a temperature above 1000°C and form lava 6.

Therefore, in the exemplary embodiment of the described invention, to obtain mineral wool, large pieces, for example briquette 4 in the form of cylinders (in the amount of 10%-75%, preferably in the amount of 30%-45%) are mixed (but need not to be mixed), for example, with:
- gabbro (35%-50%),
- slag (10%-20%), as well as
- dolomite (5%-20%).

In the developed method of manufacturing mineral wool - using the briquette 4 thus obtained - the mineral wool mainly consists of briquette 4 containing about 30-50% aluminium oxides Al₂O₃ from reclaimed waste 3. It therefore contains compounds that - in the process known from the state of the art - were supplied in the expensive and sought-after bauxite (bauxite consists of a mixture of minerals containing various concentrations of hydrated aluminium oxides, including impurities) or basalt (the chemical composition of typical basalt is SiOz: 45-55%, Al₂O₃: about 14%, CaO: about 10%, FeO: 5-14%, MgO: 5-12%, other basic compounds: 2-6%, TiO₂: 0.5-2%).

Then - the lava 6 formed in this way - undergoes the process of fibering, and then - hydrophobization.

During the process of producing lava 6 in the glass furnace for mineral wool production, waste in the form of reclaimed residues 5 is also generated, which are used in subsequent briquetting processes to obtain briquettes 4. Reclaimed residues 5 can also come from techniques known from the state of the art for producing mineral wool using bauxite or basalt.

**The list of elements:**
- **1.**: metallurgical waste (i.e., dross also called slag),
- **2.**: secondary aluminium,
- **3.**: reclaimed waste,
- **4.**: briquette,
- **5.**: reclaimed residues,
- **6.**: lava.

## Claims

1. A mineral wool manufacturing method, **characterized in that** it includes the initial stage of preparation for the use of metallurgical waste (1) obtained from the processing of aluminium dross, during which lighter, dusty fractions thereof, as well as very fine metallurgical waste (1) are recovered and isolated, and possibly the coarse-grained dross present is also used to obtain fine metallurgical waste (1)
and the metallurgical material (1) prepared in this way is typically introduced into a device used for cleaning and size classification of fine metallurgical waste (1), in which - as the fine, purified metallurgical waste (1) moves within it - separation of materials differing in grain size, mass, and physicochemical properties is carried out,
then, segregation of waste and separation into individual fractions is always carried out, after which the waste resulting from the process of cleaning fine metallurgical waste (1), called reclaimed waste (3) - containing aluminium oxide Al₂O₃ in the form of powder or dust with a grain size below 2 mm, but also with a grain size larger than 2 mm and constituting from 60% to 85% of the mass of metallurgical waste (1) - is subjected to a blending process and this reclaimed waste (3) is granulated or briquetted, preferably in a briquetting machine to obtain briquettes (4), after which
obtained briquettes (4) with dimensions of lumps ranging from about 50 mm to about 300 mm in diameter and from about 50 mm to about 500 mm in height are mixed by combining:
- briquettes (4) in the amount of about 30%-45%,
- gabbro in the amount of about 35%-50%,
- slag in the amount of about 10%-20%, and also
- dolomite in the amount of about 5%-20%, and then:
the resulting mixture is mixed and melted in a glass furnace to produce slag (6) until a temperature above 1000°C is reached, then the resulting slag (6) is subjected to the process of fiberization, and later - hydrophobization.

2. The mineral wool manufacturing method, according to claim 1, **characterized in that** the reclaimed waste (3) is subjected to a blending process using a binder in the following proportions:
- 1-100% of the mass of reclaimed waste (3),
- 0-70% of the mass of cement or lime,
- 0-70% of the mass of reclaimed residues (5) obtained from another previous process of producing lava (6).

3. The mineral wool manufacturing method, according to claim 2, **characterized in that** the reclaimed waste (3) is subjected to a blending process using a binder in the following proportions:
- 30-50% of reclaimed waste (3),
- 5-25% cement or lime,
- 25-35% of reclaimed residues (5) obtained from another previous process of producing lava (6).

4. The mineral wool manufacturing method, according to claims 1 to 3, **characterized in that** after briquetting, during the stage of combining the briquette (4) with other materials, before heating them to produce lava (6), the briquette (4) is mixed with limestone or coke and then melted together with other materials in a glass furnace to produce lava (6).

5. The mineral wool manufacturing method, according to claims 1 to 4, **characterized in that** the comminution of metallurgical waste (1) is carried out in mills, preferably in a ball mill.
